(19) Europäisches Patentamt
European Patent Office
Office européen des brevets

(11) EP 4 800 909 A1

(12) EUROPEAN PATENT APPLICATION

(43) Date of publication:
**02.09.2026 Bulletin 2026/36**

(21) Application number: **26151071.3**

(22) Date of filing: **09.01.2026**

(51) International Patent Classification (IPC):
***H02M 7/5395*** *(2006.01)* *H02P 27/08* *(2006.01)*

(52) Cooperative Patent Classification (CPC):
**H02M 7/5395;** H02P 27/085

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.02.2025 JP 2025032190**

(71) Applicant: **Hitachi Industrial Equipment Systems Co., Ltd.**
**Tokyo 101-0021 (JP)**

(72) Inventors:
- **HAYASHI, Takaaki**
  **Tokyo 101-0021 (JP)**
- **TAKEDA, Tsuyoshi**
  **Tokyo 101-0021 (JP)**
- **TAKAHASHI, Kenichi**
  **Tokyo 101-0021 (JP)**

(74) Representative: **MERH-IP Matias Erny Reichl Hoffmann**
**Patentanwälte PartG mbB**
**Paul-Heyse-Straße 29**
**80336 München (DE)**

# (54) SYNCHRONOUS PULSE PATTERNS WITH VARIBLE UPPER LIMITS FOR SWITCHING FREQUENCIES OF SELECTED PULSE NUMBERS

(57) A power conversion device includes a circuit that converts DC power into AC power by a pulse width modulation method, and a control device that controls the circuit. A control device executes: processing of controlling the circuit to operate in an asynchronous mode that asynchronously generates a carrier and a modulation wave and a synchronous mode that is used in an output frequency region higher than an output frequency region in the asynchronous mode and in which a carrier pulse number per modulation wave cycle is set from a first order to an n-th order as a multiple of 3 from a high frequency side to a low frequency side; processing of setting an upper limit frequency of a k-th-order (k<n) carrier frequency region to a high frequency side of a common upper limit frequency initially set for each order of the synchronous mode; and processing of setting an upper limit frequency of a (k+1) th-order carrier frequency region to a low frequency side of the common upper limit frequency.

FIG. 4

(SIXTH ORDER)
(FIFTH ORDER)
(FOURTH ORDER)
(THIRD ORDER)
(SECOND ORDER)
(FIRST ORDER)
401
402
403
404
405
406
407
408
409
410
411
412
413
414
415
416
33pls
27pls
21pls
15pls
9pls
3pls
11.0
10.0
9.0
8.1
7.8
6.6
6.4
3.3
2.0
CARRIER FREQUENCY (kHz)
60
300
370
429
733
1111
OUTPUT FREQUENCY (Hz)



Processed by Luminess, 75001 PARIS (FR)

## Description

CROSS-REFERENCE TO RELATED APPLICATIONS

The disclosure of Japanese Patent Application No. 2025-032190 filed on February 28, 2025 including the specification, drawings and abstract is incorporated herein by reference in its entirety.

BACKGROUND

The present invention relates to a power conversion device and a carrier frequency upper limit setting method.

Power conversion devices that convert DC power into AC power by the pulse width modulation (PWM) method are known. Japanese Patent Application Laid-Open No. 2014-204560 describes a power conversion device that converts a DC voltage into an AC voltage of a desired amplitude and frequency by performing on/off control of a plurality of switching elements by PWM.

In a region where the frequency of an AC voltage fundamental wave is low, the power conversion device operates in variable voltage variable frequency control that increases the modulation rate in proportion to the frequency, that is, in an asynchronous mode. In addition, after the amplitude of the AC voltage is maximized, the power conversion device operates in constant voltage variable frequency control that increases only the frequency of the AC voltage, that is, in a synchronous mode.

SUMMARY

For the carrier frequency of PWM in the power conversion device, the upper limit frequency is set for various reasons such as an increase in electromagnetic noise and an increase in leakage current. Therefore, in the synchronous mode of the power conversion device, when the output frequency is increased and the carrier frequency reaches the upper limit frequency, control is performed to reduce the carrier frequency band by reducing the carrier pulse number per modulation wave cycle (hereinafter also referred to as the synchronous PWM pulse number). That is, when the output frequency is changed in the synchronous mode while the power conversion device is used, the synchronous PWM pulse number transitions at a point where the carrier frequency is close to the upper limit frequency.

On the other hand, when the synchronous PWM pulse number transitions, an operation of the power conversion device, that is, load driving tends to be unstable. Therefore, users request that the transition of the synchronous PWM pulse number not occur frequently in an output frequency region frequently used.

An object of the present invention is to provide a power conversion device capable of suppressing unstable operation due to the transition of the synchronous PWM pulse number according to the output frequency region used.

A power conversion device according to an embodiment includes a circuit that converts DC power into AC power by the pulse width modulation method, and a control device that controls the circuit, in which the control device executes: processing of controlling the circuit to operate in an asynchronous mode that asynchronously generates a carrier and a modulation wave and a synchronous mode that is used in an output frequency region higher than an output frequency region in the asynchronous mode and in which the carrier pulse number per modulation wave cycle is set from a first order to an n-th order as a multiple of 3 from a high frequency side to a low frequency side; processing of setting the upper limit frequency of a k-th-order ($k<n$) carrier frequency region to a high frequency side of a common upper limit frequency initially set for each order of the synchronous mode; and processing of setting the upper limit frequency of a ($k+1$) th-order carrier frequency region to a low frequency side of the common upper limit frequency.

A carrier frequency upper limit setting method according to an embodiment is a carrier frequency upper limit setting method for a power conversion device that converts DC power into AC power by the pulse width modulation method, and operates in an asynchronous mode that asynchronously generates a carrier and a modulation wave and a synchronous mode that is used in an output frequency region higher than an output frequency region in the asynchronous mode and in which the carrier pulse number per modulation wave cycle is set from a first order to an n-th order as a multiple of 3 from a high frequency side to a low frequency side, in which a control device included in the power conversion device executes: processing of setting the upper limit frequency of a k-th-order ($k<n$) carrier frequency region to a high frequency side of a common upper limit frequency initially set for each order of the synchronous mode; and processing of setting the upper limit frequency of a ($k+1$) th-order carrier frequency region to a low frequency side of the common upper limit frequency.

According to the embodiment, it is possible to provide the power conversion device capable of suppressing unstable operation due to the transition of the synchronous PWM pulse number according to the output frequency region used.

BRIEF DESCRIPTION OF THE DRAWINGS

FIG. 1A is a diagram illustrating a hardware configuration example of an inverter device according to the present embodiment.
FIG. 1B is a diagram illustrating a functional block configuration example of the inverter device according to the present embodiment.
FIG. 2 is a diagram illustrating a relationship between a carrier frequency for each synchronous PWM pulse number and an output frequency according to a reference example.
FIG. 3 is a diagram illustrating a relationship between a carrier frequency for each synchronous PWM pulse number and an output frequency according to an examination example.
FIG. 4 is a diagram illustrating a relationship between a carrier frequency for each synchronous PWM pulse number and an output frequency according to the present embodiment.
FIG. 5 is a flowchart illustrating an example of processing related to setting of the carrier frequency in the inverter device according to the present embodiment.
FIG. 6 is a diagram illustrating an example of each waveform in PWM control in the inverter device.
FIG. 7 is a diagram illustrating an example of an operation pattern in the inverter device.

DETAILED DESCRIPTION

Hereinafter, an embodiment of the present invention will be described. Note that the same or corresponding components in the embodiment are denoted by the same reference numerals, and repeated description is omitted unless necessary.

(Background of examination by inventor)

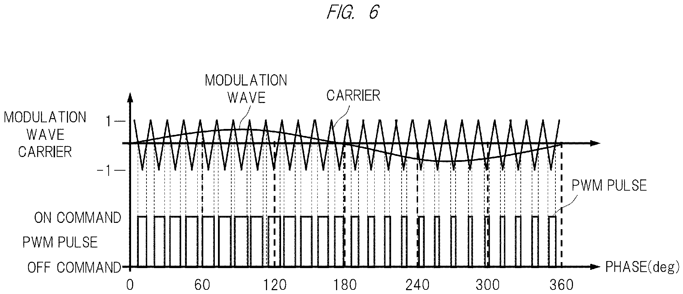

FIG. 6 is a diagram illustrating an example of each waveform in PWM control in an inverter device. The inverter device is an example of a power conversion device. FIG. 6 illustrates a modulation wave obtained by normalizing a command value of an AC voltage with a voltage on the DC side of the inverter device, a triangular wave shaped carrier, and a PWM pulse that is an ON/OFF command for a switching element of the inverter device. Note that FIG. 6 illustrates waveforms in one phase of three-phase AC. As illustrated in FIG. 6, based on a magnitude relationship between the modulation wave and the carrier, the PWM pulse represents the ON command when the modulation wave is larger than the carrier, and the OFF command when the modulation wave is smaller than the carrier.

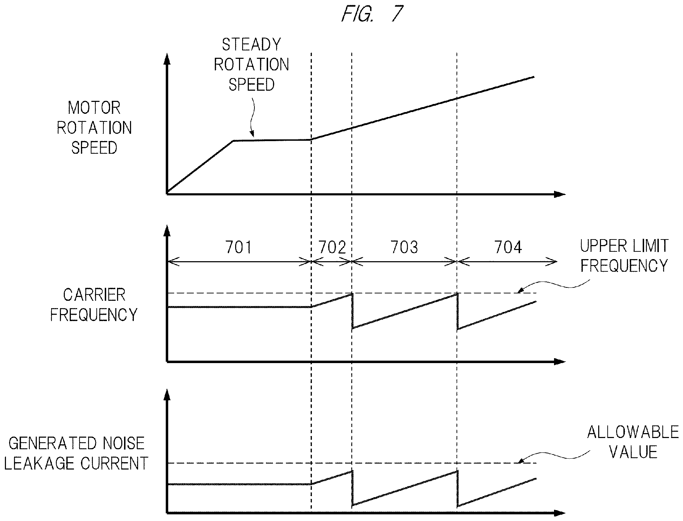

FIG. 7 is a diagram illustrating an example of an operation pattern in the inverter device. In the inverter device, in a region where the frequency of an AC voltage to be output, that is, an output frequency is low, the AC voltage is output using an asynchronous mode illustrated in FIG. 7. The asynchronous mode is a mode that generates the PWM pulse using the carrier having a sufficiently high frequency compared to the frequency of the modulation wave without fixing a phase relationship between the modulation wave and the carrier. In other words, the asynchronous mode is a mode that asynchronously generates the carrier and the modulation wave.

In a region where the frequency of the modulation wave is low in the asynchronous mode region, the frequency of the carrier is sufficiently high compared to the frequency of the modulation wave as illustrated in FIG. 7, and thus distortion of the AC voltage is small. However, when the frequency of the modulation wave increases, the distortion of the AC voltage increases. Therefore, when the frequency of the modulation wave becomes equal to or higher than a certain value, the operation mode shifts from the asynchronous mode to a synchronous mode.

In the synchronous mode, when the frequency of the modulation wave increases, the carrier pulse number per modulation wave cycle, that is, the synchronous PWM pulse number decreases stepwise by assuming multiples of 3 based on the symmetry of three-phase AC.

The operation pattern illustrated in FIG. 7 is an example in which a motor is connected as a drive load of the inverter device. In this example, in a low-speed operation section that is an operation section from startup to a steady operation speed (steady rotation speed), asynchronous PWM control is performed (an operation range corresponding to a section (701) in FIG. 7). Then, in a high-speed operation section that is an operation section from the steady operation speed to a speed equal to or higher than the steady operation speed, control is performed such that the synchronous PWM pulse number is switched to 9, 6, and 3 in this order as a motor rotation speed (rotational speed) increases.

As illustrated in FIG. 7, PWM control is performed in the asynchronous mode in which the carrier frequency is fixed at startup with a low motor rotation speed and in the low-speed operation range (section (701) in FIG. 7). At that time, control is performed to increase the motor rotation speed to the steady operation speed and then maintain the steady operation speed. Since the carrier frequency is fixed in the section (701), generated noise and leakage current can be

suppressed to an allowable value or less as illustrated in FIG. 7.

In addition, in the range of PWM control in the synchronous mode, that is, in the section (702) to the section (704) in FIG. 7, the asynchronous PWM control is switched to the synchronous PWM control, and the pulse number is switched while increasing or reducing the carrier frequency such that generated noise and leakage current are at or below the allowable values. In the section (702), control is performed to set the synchronous PWM pulse number to 9. However, generated noise and leakage current increase to near the allowable value as the rotation speed increases. To address this, the upper limit frequency is set for the carrier frequency, and control is performed so as to prevent the carrier frequency from exceeding the upper limit frequency. Note that the upper limit frequency of the carrier frequency is determined based on, for example, a processing load of a control device, generated noise, leakage current, characteristics of the switching element, and the like.

Incidentally, a certain user frequently uses and changes the output frequency in an output frequency region of 400 to 1000 Hz, for example. In this case, there is a transition of the synchronous PWM pulse number, and the behavior of the load driven by the power conversion device is not stable in the output frequency region near a switching point of the synchronous PWM pulse number. Therefore, such a user demands that the transition of the synchronous PWM pulse number be reduced at the frequently used output frequency.

To meet the above-described demand, the inventor has set the synchronous PWM pulse number to odd multiples of 3, that is, 3, 9, 15, 21, 27, and 33, from the high frequency side of the output frequency. In addition, the inventor has set the upper limit of the carrier frequency to 10 kHz. Note that setting the synchronous PWM pulse number to "odd multiples" of 3 instead of simply using multiples of 3 is based on examination results by the inventor, which is an experience of learning that the inverter device can be operated relatively stably. In this case, the output frequency region (Hz) used for each synchronous PWM pulse number is as follows: 33 pulses: approximately 60 Hz to approximately 300 Hz; 27 pulses: approximately 300 Hz to approximately 370 Hz; 21 pulses: approximately 370 Hz to approximately 476 Hz; 15 pulses: approximately 476 Hz to approximately 666 Hz; 9 pulses: approximately 666 Hz to approximately 1111 Hz; and 3 pulses: approximately 1111 Hz and higher.

However, another user uses an output frequency region of 500 to 700 Hz most often. In this case, if the upper limit and the lower limit of a carrier frequency region for each synchronous PWM pulse number remain predetermined, the transition of the synchronous PWM pulse number frequently occurs between 15 and 9. As a result, it has been revealed that the output current overshoots during the transition of the synchronous PWM pulse number, the operation of the inverter device becomes unstable, and furthermore, the tone of a carrier sound is frequently switched.

Therefore, the inventor released the upper limit of the carrier frequency from 10 kHz to 11 kHz to widen the output frequency band for 15 pulses.

In this case, however, since the lower limit of the output frequency in 15 pulses is too high, the transition of the synchronous PWM pulse number frequently occurs between 15 and 21.

That is, in the inverter device, the output frequency region corresponding to a particular synchronous PWM pulse number cannot be sufficiently widened even if it is to be widened, and the transition of the synchronous PWM pulse number can frequently occur.

Due to the above-described circumstances, it is hoped to provide an inverter device capable of, in the output frequency region in the synchronous mode, suppressing unstable operation due to the transition of the synchronous PWM pulse number according to the output frequency region used.

(Embodiment)

In the present embodiment, an example of a method for suppressing unstable operation associated with the switching of the synchronous PWM pulse number in the synchronous mode will be described.

Specifically, the inverter device according to the present embodiment includes a circuit that converts DC power into AC power by the pulse width modulation (PWM) method, and a control device that controls the circuit. The control device controls the circuit to operate in the asynchronous mode and the synchronous mode. The asynchronous mode is a mode that asynchronously generates the carrier and the modulation wave. The synchronous mode is a mode that is used in an output frequency region higher than the output frequency region in the asynchronous mode and in which the carrier pulse number per modulation wave cycle is set from a first order to an n-th order as a multiple of 3 from the high frequency side to the low frequency side. The control device executes processing of setting the upper limit frequency of a k-th-order ($k<n$) carrier frequency region to the high frequency side of a common upper limit frequency initially set for each order of the synchronous mode. In addition, the control device executes processing of setting the upper limit frequency of a (k+1) th-order carrier frequency region to the low frequency side of the common upper limit frequency.

That is, the inverter device according to the present embodiment is configured such that the upper limit frequency of the carrier frequency region corresponding to a desired synchronous PWM pulse number (k-th order) can be set higher than the initially set common upper limit frequency. In addition, the inverter device is configured such that the lower limit frequency of the carrier frequency region corresponding to the desired synchronous PWM pulse number can be set lower

than the lower limit frequency determined from initial setting. In other words, the inverter device according to the present embodiment is configured such that in PWM control in the synchronous mode, the pulse number switching point on the high frequency side of the output frequency region corresponding to the desired synchronous PWM pulse number can be moved to the high frequency side of the frequency determined by the initial setting. In addition, the inverter device is configured such that the pulse number switching point on the low frequency side of the output frequency region corresponding to the desired synchronous PWM pulse number can be moved to the low frequency side of the frequency determined by the initial setting.

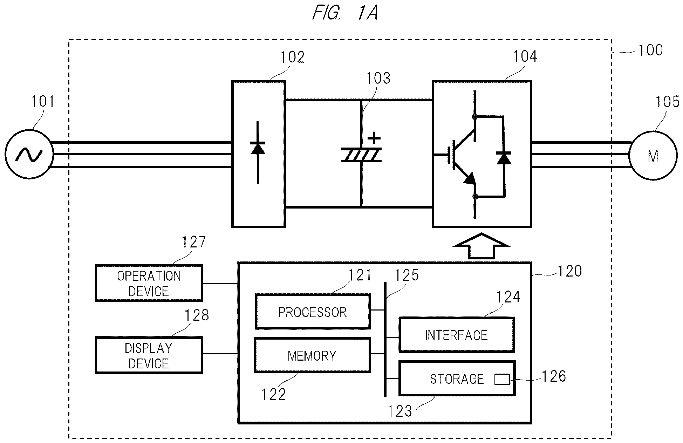

FIG. 1A is a diagram illustrating a hardware configuration example of the inverter device according to the present embodiment. An inverter device 100 according to the present embodiment includes a DC conversion circuit 102, a DC smoothing circuit 103, an AC conversion circuit 104, a control device 120, an operation device 127, and a display device 128. The control device 120 includes, for example, a computer, a microcontroller, an IC chip, an FPGA, an electronic circuit board, and the like.

The control device 120 includes, for example, a processor 121, a memory 122, an interface 124, a storage 123, and a bus 125. The processor 121, the memory 122, the interface 124, and the storage 123 are each connected to the bus 125. The processor 121 is, for example, a CPU, an MPU, a GPU, or the like. The memory 122 is, for example, a RAM, a ROM, or the like. The interface 124 is a module that inputs and outputs a signal. The storage 123 is, for example, an SSD, an HDD, a flash memory, or the like.

A predetermined program 126 is stored in the memory 122 or the storage 123. The processor 121 functions as various functional blocks by reading and executing the program 126.

The operation device 127 includes, for example, a key button, a joystick, a touch sensor, a keyboard, a mouse, and the like. The display device 128 is, for example, a liquid crystal monitor, an organic EL monitor, or the like. Note that the operation device 127 and the display device 128 may be an integrally formed touch panel, operation panel, or the like. In addition, the operation device 127 and the display device 128 may be implemented by a graphical user interface (GUI). The operation device 127 and the display device 128 may be external devices such as an externally connected personal computer and tablet terminal.

A three-phase AC power supply 101 is connected to the DC conversion circuit 102. The three-phase AC power supply 101 is, for example, a power supply that is supplied with power from an electric power company and outputs a three-phase AC voltage, a power supply that is supplied with power from a generator and outputs an AC voltage, or the like. The three-phase AC power supply 101 outputs the three-phase AC voltage to the DC conversion circuit 102. An AC motor 105 is connected to the AC conversion circuit 104. The AC motor 105 is, for example, an AC motor, an induction motor, or the like.

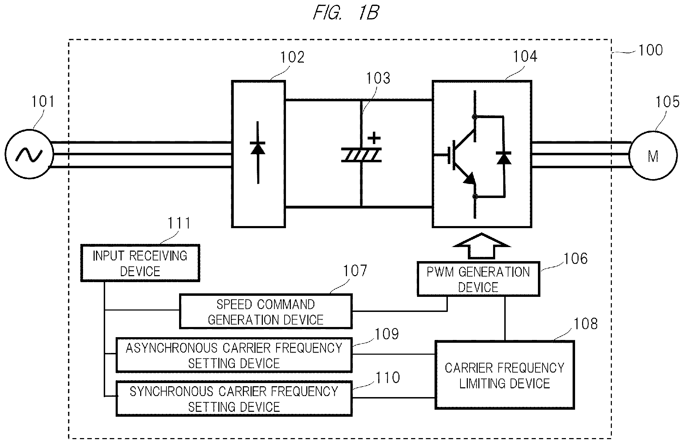

FIG. 1B is a diagram illustrating a functional block configuration example of the inverter device according to the present embodiment.

The DC conversion circuit 102 includes, for example, a diode or an IGBT and a flywheel diode. The DC conversion circuit 102 converts the AC voltage input from the three-phase AC power supply 101 into a DC voltage and outputs the DC voltage to the DC smoothing circuit 103.

The DC smoothing circuit 103 includes, for example, a smoothing capacitor. The DC smoothing circuit 103 smooths the DC voltage input from the DC conversion circuit 102 and outputs the smoothed DC voltage to the AC conversion circuit 104. Note that, for example, when the output of the generator is a DC voltage, the DC smoothing circuit 103 may receive the DC voltage directly from the generator without the DC conversion circuit 102.

The AC conversion circuit 104 includes, for example, an IGBT and a flywheel diode. The AC conversion circuit 104 receives the DC voltage output from the DC smoothing circuit 103 and a PWM command from a PWM generation device 106, converts the DC voltage into an AC voltage, and outputs the AC voltage to the AC motor 105.

The control device 120 illustrated in FIG. 1A functions as the PWM generation device 106, a speed command generation device 107, a carrier frequency limiting device 108, an asynchronous carrier frequency setting device 109, and a synchronous carrier frequency setting device 110.

The PWM generation device 106 receives a frequency command output from the speed command generation device 107 and a carrier frequency command output from the carrier frequency limiting device 108, generates PWM, and outputs the PWM to the AC conversion circuit 104.

The speed command generation device 107 determines the output frequency of the AC voltage to be output from the inverter based on, for example, a voltage command obtained from the outside and communication data from the outside, and outputs the frequency command to the PWM generation device 106.

The carrier frequency limiting device 108 receives carrier frequency settings output from the asynchronous carrier frequency setting device 109 and the synchronous carrier frequency setting device 110, and outputs the carrier frequency command to the PWM generation device 106.

The asynchronous carrier frequency setting device 109 includes, for example, a storage element. The asynchronous carrier frequency setting device 109 stores a preset carrier frequency setting value in the asynchronous mode. When the user subsequently inputs the carrier frequency setting value afterwards, the input carrier frequency setting value

is stored. At this time, the carrier frequency in the asynchronous mode is limited so as to be set within a predetermined range.

The synchronous carrier frequency setting device 110 includes, for example, a storage element. The synchronous carrier frequency setting device 110 stores a preset carrier frequency setting value in the synchronous mode. When the user subsequently inputs the carrier frequency setting value afterwards, the input carrier frequency setting value is stored. The carrier frequency setting value in the synchronous mode includes the upper limit frequency of the carrier frequency for each synchronous PWM pulse number (order). At this time, the upper limit frequency of the carrier frequency in the synchronous mode is limited so as to be set within a predetermined range.

The control device, the operation device 127, and the display device 128 illustrated in FIG. 1A function as an input receiving device 111 that receives various operations from the user, performs processing corresponding to the operations, and displays various types of information to the user.

Hereinafter, an operation will be described in which the inverter device 100 switches from the asynchronous PWM control to the synchronous PWM control and the synchronous PWM pulse number transitions according to the output frequency. Note that the operation will be described in a reference example, an examination example, and an example of the present embodiment, in this order.

<Reference example>

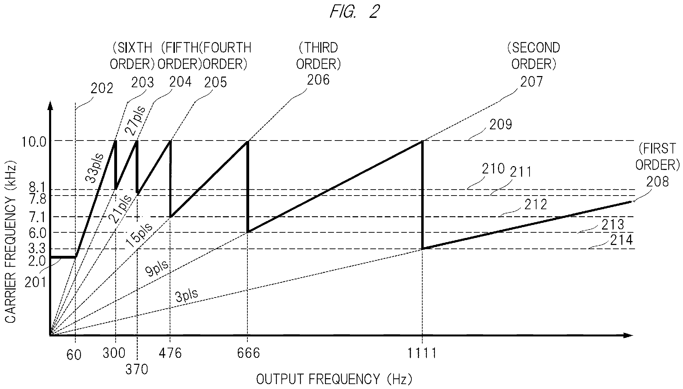

FIG. 2 is a diagram illustrating a relationship between the carrier frequency for each synchronous PWM pulse number and the output frequency according to the reference example.

The switching point of the synchronous PWM pulse number corresponding to the output frequency is determined based on the carrier frequency setting value output from the synchronous carrier frequency setting device 110. In the case of the reference example illustrated in FIG. 2, the carrier frequency setting value output by the synchronous carrier frequency setting device 110 is a fixed predetermined value and is a carrier common upper limit frequency (209) common to each synchronous PWM pulse number. For the synchronous PWM pulse number, 33 (203; sixth order), 27 (204; fifth order), 21 (205; fourth order), 15 (206; third order), 9 (207; second order), and 3 (208; first order) are used.

When the carrier common upper limit frequency (209) and each synchronous PWM pulse number used are determined, a carrier lower limit frequency for each synchronous PWM pulse number is also determined. That is, if the carrier common upper limit frequency is a fixed predetermined value, the carrier lower limit frequency for each synchronous PWM pulse number can be similarly regarded as a fixed predetermined value.

Here, the carrier upper limit frequency when the synchronous PWM pulse number is N is referred to as an N-pulse carrier upper limit frequency. In addition, the carrier lower limit frequency when the synchronous PWM pulse number is N is referred to as an N-pulse carrier lower limit frequency.

Specifically, the carrier lower limit frequency for each synchronous PWM pulse number includes a 27-pulse carrier lower limit frequency (210), a 21-pulse carrier lower limit frequency (211), a 15-pulse carrier lower limit frequency (212), a 9-pulse carrier lower limit frequency (213), and a 3-pulse carrier lower limit frequency (214).

The switching point for each synchronous PWM pulse number corresponding to the output frequency is determined based on the carrier upper limit frequency or the carrier lower limit frequency for each synchronous PWM pulse number.

In the asynchronous mode, the inverter device 100 operates at a carrier frequency (201) in the asynchronous mode. In addition, in the synchronous mode, the inverter device 100 operates at the carrier frequency in the synchronous mode obtained from the following equation (1).

$$\text{Carrier frequency in synchronous mode} = \text{output frequency} \times \text{synchronous PWM pulse number} \quad (1)$$

FIG. 2 illustrates, as an example, a case of a transition to the synchronous PWM pulse number of 33 (203) when the asynchronous mode is switched to the synchronous mode. However, when the asynchronous mode is switched to the synchronous mode, a transition to the synchronous PWM pulse number of 27 (204), 21 (205), 15 (206), 9 (207), or 3 (208) can also occur.

Note that FIG. 2 illustrates an example of a case where the carrier frequency (201) in the asynchronous mode is set to 2.0 kHz by the asynchronous carrier frequency setting device 109. In addition, FIG. 2 illustrates an example of a case where the carrier common upper limit frequency (209) in the synchronous mode is set to 10.0 kHz by the synchronous carrier frequency setting device 110.

In the case of the setting according to the above-described reference example, the carrier lower limit frequency for each synchronous PWM pulse number is as follows: The 33-pulse lower limit frequency is 2.0 kHz, the same as the asynchronous carrier frequency (201). The 27-pulse carrier lower limit frequency (210) is approximately 8.1 kHz. The 21-pulse carrier lower limit frequency (211) is approximately 7.8 kHz. The 15-pulse carrier lower limit frequency (212) is

approximately 7.1 kHz. The 9-pulse carrier lower limit frequency (213) is approximately 6.0 kHz. The 3-pulse carrier lower limit frequency (214) is approximately 3.3 kHz.

In addition, in the case of the setting according to the above-described reference example, the output frequency range for each synchronous PWM pulse number is as follows: A 33-pulse output frequency range is approximately 60 Hz to approximately 300 Hz. A 27-pulse output frequency range is approximately 300 Hz to approximately 370 Hz. A 21-pulse output frequency range is approximately 370 Hz to approximately 476 Hz. A 15-pulse output frequency range is approximately 476 Hz to approximately 666 Hz. A 9-pulse output frequency range is approximately 666 Hz to approximately 1111 Hz. In addition, a 3-pulse output frequency range is approximately 1111 Hz to the design maximum output frequency. A mode switching frequency (202) is approximately 60 Hz.

In the case of the setting according to the above-described reference example, assume that the output frequency region frequently used by the user is 500 Hz to 700 Hz. In this case, the synchronous PWM pulse number repeatedly transitions between 15 (206) and 9 (207) around a point where the output frequency is approximately 666 Hz. Therefore, it is not possible to suppress unstable operation due to the transition of the synchronous PWM pulse number according to the output frequency region used.

<Examination example>

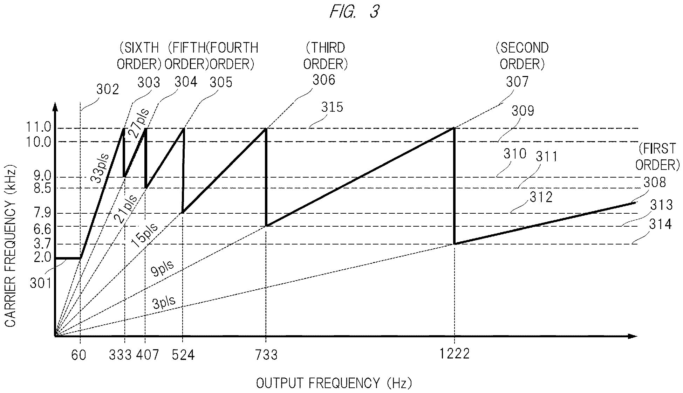

FIG. 3 is a diagram illustrating a relationship between the carrier frequency for each synchronous PWM pulse number and the output frequency according to the examination example. The examination example is an example of a case where the upper limit of the carrier frequency is released and raised compared to the above-described reference example.

In the above-described examination example, as illustrated in FIG. 3, the carrier frequency setting value output by the synchronous carrier frequency setting device 110 is a carrier common upper limit frequency (315) common to each synchronous PWM pulse number. For the synchronous PWM pulse number, as in the above-described reference example, 33 (303; sixth order), 27 (304; fifth order), 21 (305; fourth order), 15 (306; third order), 9 (307; second order), and 3 (308; first order) are used.

When the carrier common upper limit frequency (315) and each synchronous PWM pulse number used are determined, the carrier lower limit frequency for each synchronous PWM pulse number is also determined.

Specifically, the carrier lower limit frequency for each synchronous PWM pulse number includes a 27-pulse carrier lower limit frequency (310), a 21-pulse carrier lower limit frequency (311), a 15-pulse carrier lower limit frequency (312), a 9-pulse carrier lower limit frequency (313), and a 3-pulse carrier lower limit frequency (314).

The switching point for each synchronous PWM pulse number corresponding to the output frequency is determined based on the carrier common upper limit frequency or the carrier lower limit frequency for each synchronous PWM pulse number.

As illustrated in FIG. 3, as in the above-described reference example, the above-described examination example illustrates, as an example, a case of a transition to the synchronous PWM pulse number of 33 (303) when the asynchronous mode is switched to the synchronous mode.

Note that, as illustrated in FIG. 3, the above-described examination example illustrates an example of a case where a carrier frequency (301) in the asynchronous mode is set to 2.0 kHz by the asynchronous carrier frequency setting device 109. In addition, the above-described examination example illustrates an example of a case where the carrier common upper limit frequency (315) in the synchronous mode is set to 11.0 kHz by the synchronous carrier frequency setting device 110. The carrier common upper limit frequency (315) exceeds 10.0 kHz, which is a carrier common upper limit frequency (309) in the above-described reference example.

The reason why the upper limit of the carrier frequency can be raised from the original upper limit frequency as described above is that the original carrier common upper limit frequency has been set with a certain margin in design. In addition, when raising the carrier common upper limit frequency, it is necessary to accept an increase in generated noise, leakage current, and the like to some extent. Therefore, it should be noted that it is difficult to greatly raise the carrier common upper limit frequency, and there are also limitations on the rise.

In the case of the setting according to the above-described examination example, the carrier lower limit frequency for each synchronous PWM pulse number is as follows: The 33-pulse lower limit frequency is 2.0 kHz, the same as the carrier frequency (301) in the asynchronous mode. The 27-pulse carrier lower limit frequency (310) is approximately 9.0 kHz. The 21-pulse carrier lower limit frequency (311) is approximately 8.5 kHz. The 15-pulse carrier lower limit frequency (312) is approximately 7.9 kHz. The 9-pulse carrier lower limit frequency (313) is approximately 6.6 kHz. The 3-pulse carrier lower limit frequency (314) is approximately 3.7 kHz.

In addition, in the case of the setting according to the above-described examination example, the output frequency range for each synchronous PWM pulse number is as follows: A 33-pulse output frequency range is approximately 60 Hz to approximately 333 Hz. A 27-pulse output frequency range is approximately 333 Hz to approximately 407 Hz. A 21-pulse output frequency range is approximately 407 Hz to approximately 524 Hz. A 15-pulse output

frequency range is approximately 524 Hz to approximately 733 Hz. A 9-pulse output frequency range is approximately 733 Hz to approximately 1222 Hz. In addition, a 3-pulse output frequency range is approximately 1222 Hz to the design maximum output frequency. A mode switching frequency (302) is approximately 60 Hz.

In the case of the setting according to the above-described examination example, assume that the output frequency region frequently used by the user is 500 Hz to 700 Hz. In this case, the synchronous PWM pulse number repeatedly transitions between 21 (305) and 15 (306) around a point where the output frequency is approximately 524 Hz. Therefore, even if the upper limit of the carrier frequency is released and raised as in the above-described examination example, the output frequency range that can be used within the same synchronous PWM pulse cannot be sufficiently expanded. That is, it is difficult to suppress unstable operation due to the transition of the synchronous PWM pulse number according to the output frequency region used.

<Example of the present embodiment>

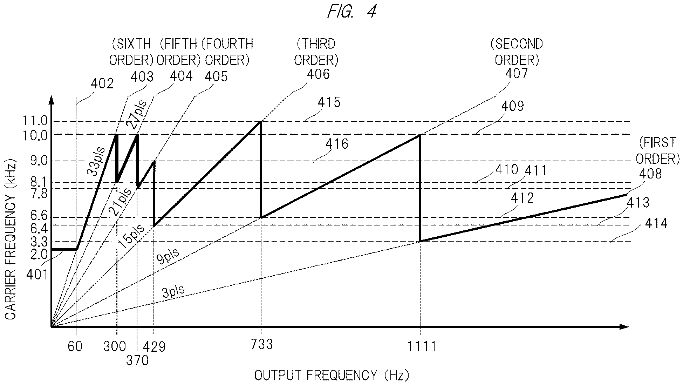

FIG. 4 is a diagram illustrating a relationship between the carrier frequency and the output frequency according to the present embodiment. The example of the present embodiment is an example of a case where, in the desired synchronous PWM pulse number, the carrier upper limit frequency can be set to the high frequency side of the initially set carrier common upper limit frequency, and the carrier lower limit frequency can be set to the low frequency side of the frequency determined by the initial setting.

In the example of the present embodiment, as illustrated in FIG. 4, 33 (403; sixth order), 27 (404; fifth order), 21 (405; fourth order), 15 (406; third order), 9 (407; second order), and 3 (408; first order) are used for the synchronous PWM pulse number, as in the above-described reference example and examination example.

In the synchronous carrier frequency setting device 110, a common carrier upper limit frequency (409) common to each synchronous PWM pulse number is set as the initial setting.

However, in the example of the present embodiment, a 15-pulse (third-order) carrier upper limit frequency (415) is set to the high frequency side of the carrier common upper limit frequency (409) after the initial setting. In addition, a 21-pulse (fourth-order) carrier upper limit frequency (416) is set to the low frequency side of the carrier common upper limit frequency (409). Note that setting the 21-pulse (fourth-order) carrier frequency upper limit value (416) is substantially the same as setting a 15-pulse (third-order) carrier frequency lower limit value (413).

The carrier frequency lower limit value for each synchronous PWM pulse number includes a 27-pulse (fifth-order) carrier frequency lower limit value (410), a 21-pulse (fourth-order) carrier frequency lower limit value (411), the 15-pulse (third-order) carrier frequency lower limit value (413), a 9-pulse (second-order) carrier frequency lower limit value (412), and a 3-pulse (first-order) carrier frequency lower limit value (414) .

The switching point for each synchronous PWM pulse number corresponding to the output frequency is determined based on the carrier upper limit frequency or the carrier lower limit frequency for each synchronous PWM pulse number.

As illustrated in FIG. 4, as in the above-described reference example and examination example, the example of the present embodiment illustrates, as an example, a case of a transition to the synchronous PWM pulse number of 33 (403) when the asynchronous mode is switched to the synchronous mode.

Note that, as illustrated in FIG. 4, the example of the present embodiment illustrates an example of a case where a carrier frequency (401) in the asynchronous mode is set to 2.0 kHz by the asynchronous carrier frequency setting device 109. In addition, the carrier common upper limit frequency (409) is set to 10.0 kHz by the synchronous carrier frequency setting device 110. The maximum frequency that can be set as the specific carrier upper limit frequency is, for example, 11.0 kHz. Furthermore, the 15-pulse (third-order) carrier upper limit frequency (415) is set to 11.0 kHz, and the 21-pulse (fourth-order) carrier upper limit frequency (416) is set to 9.0 kHz.

In the case of the setting according to the above-described example of the present embodiment, the carrier lower limit frequency for each synchronous PWM pulse number is as follows: The 33-pulse carrier lower limit frequency is 2.0 kHz, the same as the carrier frequency (401) in the asynchronous mode. The 27-pulse carrier lower limit frequency (410) is approximately 8.1 kHz. The 21-pulse carrier lower limit frequency (411) is approximately 7.8 kHz. The 15-pulse carrier lower limit frequency (413) is approximately 6.4 kHz. The 9-pulse carrier lower limit frequency (412) is approximately 6.6 kHz. The 3-pulse carrier lower limit frequency (414) is approximately 3.3 kHz.

In addition, in the case of the setting according to the example of the present embodiment, the output frequency range for each synchronous PWM pulse number is as follows: A 33-pulse output frequency range is approximately 60 Hz to approximately 300 Hz. A 27-pulse output frequency range is approximately 300 Hz to approximately 370 Hz. A 21-pulse output frequency range is approximately 370 Hz to approximately 429 Hz. A 15-pulse output frequency range is approximately 429 Hz to approximately 733 Hz. A 9-pulse output frequency range is approximately 733 Hz to approximately 1111 Hz. In addition, a 3-pulse output frequency range is approximately 1111 Hz to the design maximum output frequency. A mode switching frequency (402) is approximately 60 Hz.

As described in the above-described examination example, it was difficult to prevent the synchronous PWM

pulse number from being switched in the output frequency region of approximately 500 Hz to 700 Hz only by releasing the upper limit of the carrier frequency.

However, in the example of the present embodiment, the upper limit frequency of the carrier frequency region corresponding to the desired synchronous PWM pulse number can be set higher than the initially set common upper limit frequency in PWM control in the synchronous mode. In addition, the lower limit frequency of the carrier frequency region corresponding to the desired synchronous PWM pulse number can be set lower than the frequency determined based on the initial setting. In other words, the switching point on the low frequency side in the desired synchronous PWM pulse is set to the further low frequency side, and the switching point on the high frequency side is set to the further high frequency side. Alternatively, the switching point on the low frequency side in the desired synchronous PWM pulse is further advanced, and the switching point on the high frequency side is further delayed.

As a result, the switching of the synchronous PWM pulse number can be prevented from occurring in the output frequency region where the switching of the synchronous PWM pulse number occurs frequently in the setting of the reference example or the examination example. For example, as illustrated in FIG. 4, the switching point of the synchronous PWM pulse number can be prevented from being generated in the output frequency region of approximately 500 Hz to 700 Hz. As a result, it is possible to suppress unstable operation due to the transition (switching) of the synchronous PWM pulse number in the inverter device.

In addition, the user can reset the upper limit frequency of the carrier frequency region in the k-th- and (k+1) th-order synchronous PWM pulse numbers corresponding to the frequently used output frequency region to a frequency different from the initial setting. Specifically, the upper limit frequency of the carrier frequency region in the k-th-order synchronous PWM pulse number can be raised from the initial setting. In addition, the upper limit frequency of the carrier frequency region in the (k+1) th-order synchronous PWM pulse number can be lowered from the initial setting. As a result, the user can prevent the switching of the synchronous PWM pulse number from occurring in the frequently used output frequency region, and can suppress unstable operation due to the transition (switching) of the synchronous PWM pulse number.

In addition, with the above-described configuration of the inverter device according to the present embodiment, for example, the following effects can also be expected.

According to the present embodiment, when there is a resonance point near the synchronous PWM pulse switching frequency, the frequency at which the synchronous PWM pulse number transitions can be moved forward or backward, thus increasing the number of patterns that can avoid the resonance point.

In addition, according to the present embodiment, the transition timing of the synchronous PWM pulse number at which the carrier frequency is switched can be set more flexibly. Therefore, when a frequency region where the user feels the tone of a carrier frequency annoying is used, the number of patterns that can avoid a situation where the user feels the tone of the carrier frequency annoying is increased.

In addition, according to the present embodiment, the upper limit of the carrier frequency can be reduced from the initially set frequency, and the carrier frequency is reduced in the same output frequency region as compared with the case where the carrier frequency is not reduced. Therefore, the amount of heat generated from the inverter device can be suppressed, and a customer can find it advantageous to select a smaller-sized inverter device.

In addition, according to the present embodiment, the upper limit of the carrier frequency can be reduced from the initially set frequency, and the synchronous PWM pulse width is widened as compared with the case where the carrier frequency is not reduced. This leads to an increase in the output voltage, thus allowing a larger output torque than the torque at the same output frequency to be generated.

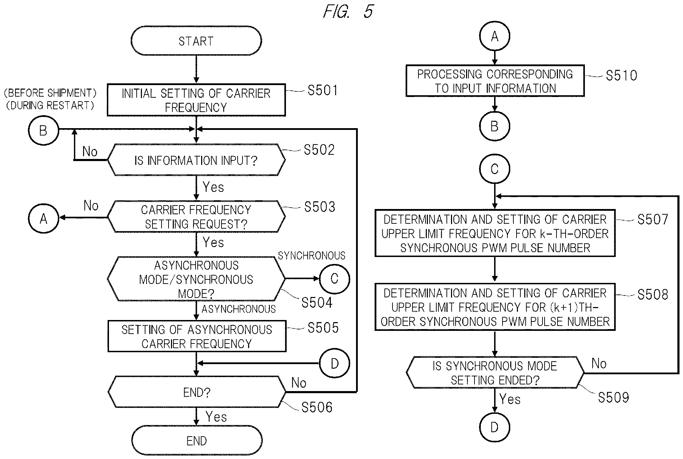

FIG. 5 is a flowchart illustrating an example of processing related to the setting of the carrier frequency in the inverter device 100 according to the present embodiment. The processing related to the setting of the carrier frequency is performed, for example, according to the flow illustrated in FIG. 5. Note that, in the flowchart illustrated in FIG. 5, connection is made between terminals with the same symbol, that is, terminals A, terminals B, terminals C, and terminals D. The configuration, processing contents, order, and the like of each step in the flow illustrated in FIG. 5 are merely examples, and are not limited thereto.

In step S501, the initial setting (default setting) of the carrier frequency is performed. Specifically, the asynchronous carrier frequency setting device 109 executes the processing of setting a predetermined default value as an asynchronous carrier frequency. In addition, the synchronous carrier frequency setting device 110 executes the processing of setting a predetermined default value for the carrier common upper limit frequency for each synchronous PWM pulse number (first to n-th order) as a synchronous carrier frequency setting value. The default value of the asynchronous carrier frequency is, for example, 2.0 kHz. The default value of the carrier common upper limit frequency is, for example, 10.0 kHz. Note that the processing in step S501 is performed, for example, before the shipment of the inverter device 100, during restart, or at other timings.

In step S502, it is determined whether or not information has been input. Specifically, the input receiving device 111 executes the processing of determining whether or not the information has been input by direct operation of the user, input of information via the terminal by the user, or input of information from the external device. Here, when it is determined

that the information has been input (S502: Yes), the processing step proceeds to step S503. On the other hand, when it is determined that the information has not been input (S502: No), the processing step returns to step S502.

In step S503, it is determined whether or not a carrier frequency setting request has been made. Specifically, the input receiving device 111 executes the processing of determining whether or not the carrier frequency setting request for setting the carrier frequency has been made based on the input information. Here, when it is determined that the carrier frequency setting request has been made (S503: Yes), the processing step proceeds to step S504. On the other hand, when it is determined that the carrier frequency setting request has not been made (S503: No), the processing step proceeds to step S510.

In step S510, processing corresponding to the input information is performed. Specifically, the input receiving device 111 executes the processing corresponding to the input information. When the processing is completed, the processing step returns to step S502.

In step S504, it is determined whether the setting target is the asynchronous mode or the synchronous mode. Specifically, the input receiving device 111 executes the processing of determining whether the setting target is the asynchronous mode or the synchronous mode based on the input information. Here, when it is determined that the setting target is the asynchronous mode (S504: asynchronous), the processing step proceeds to step S505. On the other hand, when it is determined that the setting target is the synchronous mode (S504: synchronous), the processing step proceeds to step S507.

In step S505, the asynchronous carrier frequency is set. Specifically, the asynchronous carrier frequency setting device 109 executes the processing of setting the asynchronous carrier frequency based on the information input via the input receiving device 111. Then, the processing step proceeds to step S506.

In step S506, it is determined whether or not to end the processing. Specifically, the input receiving device 111 executes the processing of determining whether or not to end the processing based on whether or not there is a factor for ending the processing, such as the issuance of an error signal or the input of forced end operation. Here, when it is determined to end the processing (S506: Yes), the processing ends. On the other hand, when it is determined not to end the processing (S506: No), the processing step returns to step S502.

In step S507, the carrier upper limit frequency in the k-th-order synchronous PWM pulse number is determined and set. Specifically, the synchronous carrier frequency setting device 110 executes the processing of determining a frequency to be set as the carrier upper limit frequency for the k-th-order synchronous PWM pulse number based on the information input via the input receiving device 111. Then, the synchronous carrier frequency setting device 110 executes the processing of setting the determined frequency as the carrier upper limit frequency for the k-th-order synchronous PWM pulse number. Then, the processing step proceeds to step S508.

In the present embodiment, the k-th-order synchronous PWM pulse number subject to the setting is selected from among 27 (fifth order), 21 (fourth order), 15 (third order), 9 (second order), and 3 (first order). The above-described input information may be input information by the user. As a result, the user can set the "carrier upper limit frequency corresponding to the desired synchronous PWM pulse number" to a desired frequency. For the k-th-order carrier upper limit frequency, a frequency higher than the initially set carrier common upper limit frequency can be set. However, the maximum frequency that can be set is, for example, 11.0 kHz. Here, for example, the third-order carrier upper limit frequency, that is, the carrier upper limit frequency when the synchronous PWM pulse number is 15 is set to 11.0 kHz.

In step S508, the carrier upper limit frequency in the (k+1) th-order synchronous PWM pulse number is determined and set. Specifically, the synchronous carrier frequency setting device 110 executes the processing of determining a frequency to be set as the carrier upper limit frequency for the (k+1) th-order synchronous PWM pulse number based on the information input via the input receiving device 111. Then, the synchronous carrier frequency setting device 110 executes the processing of setting the determined frequency as the carrier upper limit frequency for the (k+1) th-order synchronous PWM pulse number. Then, the processing step proceeds to step S509.

In the present embodiment, the (k+1) th-order synchronous PWM pulse number subject to the setting is selected from among 33 (sixth order), 27 (fifth order), 21 (fourth order), 15 (third order), and 9 (second order). The above-described input information may be input information by the user. As a result, the user can set the "carrier lower limit frequency corresponding to the desired synchronous PWM pulse number" to a desired frequency. For the (k+1) th-order carrier upper limit frequency, a frequency lower than the initially set carrier common upper limit frequency can be set. Here, for example, the fourth-order carrier upper limit frequency, that is, the carrier upper limit frequency when the synchronous PWM pulse number is 21 is set to 9.0 kHz.

In the processing in steps S507 and S508, the user can reset the upper limit frequency of the carrier frequency region in the k-th- and (k+1) th-order synchronous PWM pulse numbers corresponding to the frequently used output frequency region to a frequency different from the initial setting. Specifically, the upper limit frequency of the carrier frequency region in the k-th-order synchronous PWM pulse number can be raised from the initial setting. In addition, the upper limit frequency of the carrier frequency region in the (k+1) th-order synchronous PWM pulse number can be lowered from the initial setting. As a result, the user can prevent the switching of the synchronous PWM pulse number from occurring in the frequently used output frequency region, for example, of approximately 500 Hz to approximately 700 Hz in

the present example, and can suppress unstable operation due to the transition (switching) of the synchronous PWM pulse number.

Note that, here, the processing of step 508 is performed after the processing of step S507, but the order of the processing is not limited thereto, and the processing of step S507 may be performed after the processing of step S508.

In step S509, it is determined whether or not to end the setting in the synchronous mode. Specifically, the input receiving device 111 executes the processing of determining whether or not to end the setting of the carrier upper limit frequency in the synchronous mode based on the information input from the user. Here, when it is determined to end the setting in the synchronous mode (S509: Yes), the processing step proceeds to step S506. On the other hand, when it is determined not to end the setting in the synchronous mode, that is, to continue the setting (S509: No), the processing step proceeds to step S507.

Thus, the carrier frequency upper limit setting method performed based on the flow as illustrated in FIG. 5 is also an embodiment.

In the above-described embodiment, the inverter device converts a DC voltage into a three-phase AC voltage. Such an inverter device is often used particularly to drive motors that require a relatively large torque and a high rotational speed, such as those for automobile wheels and railroad vehicle wheels. Therefore, the inverter device according to the above-described embodiment is particularly effective for motors requiring a large torque and a high rotational speed.

Note that the present invention is not limited to the above-described embodiment, and includes various modifications. For example, the above-described embodiment has been described in detail to describe the present invention in an easy-to-understand manner, and is not necessarily limited to those having all the described configurations.

For example, the inverter device according to the above-described embodiment converts a DC voltage into an AC voltage, but may convert a DC current into an AC current. In addition, the inverter device according to the above-described embodiment converts DC power into three-phase AC power, but may convert DC power into single-phase AC power.

A part of the configuration of a certain embodiment can be replaced with the configuration of another embodiment, and the configuration of another embodiment can be added to the configuration of a certain embodiment.

Another configuration can be added to, deleted from, and replaced with a part of the configuration of each embodiment.

A part or all of the above-described configurations, functions, processing units, processing means, and the like may be implemented by hardware, for example, by designing an integrated circuit.

The above-described configurations, functions, and the like may be implemented by software by causing a processor to interpret and execute a program for realizing each function. Information such as a program, a table, and a file for realizing each function can be stored in a storage device such as a memory, a hard disk, and a solid state drive (SSD) , or a recording medium such as an IC card, an SD card, and a DVD.

For the control lines and the information lines, ones considered to be necessary for the description are indicated, and all the control lines and the information lines on the product are not necessarily indicated. In practice, it may be considered that almost all the configurations are connected to each other.

## Claims

**1.** A power conversion device comprising:

a circuit that converts DC power into AC power by a pulse width modulation method; and
a control device that controls the circuit,
wherein the control device executes:

processing of controlling the circuit to operate in an asynchronous mode that asynchronously generates a carrier and a modulation wave and a synchronous mode that is used in an output frequency region higher than an output frequency region in the asynchronous mode and in which a carrier pulse number per modulation wave cycle is set from a first order to an n-th order as a multiple of 3 from a high frequency side to a low frequency side;
processing of setting an upper limit frequency of a k-th-order (k<n) carrier frequency region to a high frequency side of a common upper limit frequency initially set for each order of the synchronous mode; and
processing of setting an upper limit frequency of a (k+1) th-order carrier frequency region to a low frequency side of the common upper limit frequency.

**2.** The power conversion device according to claim 1,
wherein the control device executes processing of determining a frequency to be set as the upper limit frequency of the

k-th-order carrier frequency region and a frequency to be set as the upper limit frequency of the (k+1) th-order carrier frequency region based on input information by a user.

**3.** The power conversion device according to claim 1, wherein the multiple of 3 is an odd multiple of 3.

**4.** The power conversion device according to claim 1, wherein a DC voltage is converted into a three-phase AC voltage.

**5.** A carrier frequency upper limit setting method for a power conversion device that converts DC power into AC power by a pulse width modulation method, and operates in an asynchronous mode that asynchronously generates a carrier and a modulation wave and a synchronous mode that is used in an output frequency region higher than an output frequency region in the asynchronous mode and in which a carrier pulse number per modulation wave cycle is set from a first order to an n-th order as a multiple of 3 from a high frequency side to a low frequency side, wherein a control device included in the power conversion device executes:

processing of setting an upper limit frequency of a k-th-order (k<n) carrier frequency region to a high frequency side of a common upper limit frequency initially set for each order of the synchronous mode; and
processing of setting an upper limit frequency of a (k+1) th-order carrier frequency region to a low frequency side of the common upper limit frequency.

**6.** The carrier frequency upper limit setting method according to claim 5, wherein the control device executes processing of determining a frequency to be set as the upper limit frequency of the k-th-order carrier frequency region and a frequency to be set as the upper limit frequency of the (k+1) th-order carrier frequency region based on input information by a user.

**7.** The carrier frequency upper limit setting method according to claim 5, wherein the multiple of 3 is an odd multiple of 3.

**8.** The carrier frequency upper limit setting method according to claim 5, wherein the power conversion device converts a DC voltage into a three-phase AC voltage.

*FIG. 1A*

100
101
102
103
104
105
M
127
OPERATION DEVICE
128
DISPLAY DEVICE
120
121
125
PROCESSOR
124
INTERFACE
MEMORY
STORAGE
126
122
123

FIG. 1B

100
102
103
104
101
105
M
111
INPUT RECEIVING DEVICE
PWM GENERATION DEVICE
106
107
SPEED COMMAND GENERATION DEVICE
108
109
ASYNCHRONOUS CARRIER FREQUENCY SETTING DEVICE
CARRIER FREQUENCY LIMITING DEVICE
110
SYNCHRONOUS CARRIER FREQUENCY SETTING DEVICE

FIG. 2

(SIXTH ORDER)
(FIFTH ORDER)
(FOURTH ORDER)
(THIRD ORDER)
(SECOND ORDER)
(FIRST ORDER)
201
202
203
204
205
206
207
208
209
210
211
212
213
214
33pls
27pls
21pls
15pls
9pls
3pls
10.0
8.1
7.8
7.1
6.0
3.3
2.0
CARRIER FREQUENCY (kHz)
60
300
370
476
666
1111
OUTPUT FREQUENCY (Hz)

FIG. 3

(SIXTH ORDER)
(FIFTH ORDER)
(FOURTH ORDER)
(THIRD ORDER)
(SECOND ORDER)
(FIRST ORDER)
301
302
303
304
305
306
307
308
309
310
311
312
313
314
315
11.0
10.0
9.0
8.5
7.9
6.6
3.7
2.0
CARRIER FREQUENCY (kHz)
33pls
27pls
21pls
15pls
9pls
3pls
60
333
407
524
733
1222
OUTPUT FREQUENCY (Hz)

*FIG. 4*

(SIXTH ORDER)
(FIFTH ORDER)
(FOURTH ORDER)
(THIRD ORDER)
(SECOND ORDER)
(FIRST ORDER)
401
402
403
404
405
406
407
408
409
410
411
412
413
414
415
416
33pls
27pls
21pls
15pls
9pls
3pls
11.0
10.0
9.0
8.1
7.8
6.6
6.4
3.3
2.0
CARRIER FREQUENCY (kHz)
60
300
370
429
733
1111
OUTPUT FREQUENCY (Hz)

FIG. 5
START
(BEFORE SHIPMENT)
(DURING RESTART)
INITIAL SETTING OF CARRIER FREQUENCY
S501
B
No
IS INFORMATION INPUT?
S502
Yes
No
A
CARRIER FREQUENCY SETTING REQUEST?
S503
Yes
SYNCHRONOUS
ASYNCHRONOUS MODE/SYNCHRONOUS MODE?
C
S504
ASYNCHRONOUS
SETTING OF ASYNCHRONOUS CARRIER FREQUENCY
S505
D
END?
No
S506
Yes
END
A
PROCESSING CORRESPONDING TO INPUT INFORMATION
S510
B
C
DETERMINATION AND SETTING OF CARRIER UPPER LIMIT FREQUENCY FOR k-TH-ORDER SYNCHRONOUS PWM PULSE NUMBER
S507
DETERMINATION AND SETTING OF CARRIER UPPER LIMIT FREQUENCY FOR (k+1)TH-ORDER SYNCHRONOUS PWM PULSE NUMBER
S508
IS SYNCHRONOUS MODE SETTING ENDED?
No
S509
Yes
D

FIG. 6

MODULATION
WAVE
CARRIER
MODULATION
WAVE
CARRIER
1
-1
PWM PULSE
ON COMMAND
PWM PULSE
OFF COMMAND
PHASE(deg)
0
60
120
180
240
300
360

FIG. 7

STEADY
ROTATION
SPEED
MOTOR
ROTATION
SPEED
701
702
703
704
UPPER LIMIT
FREQUENCY
CARRIER
FREQUENCY
GENERATED NOISE
LEAKAGE CURRENT
ALLOWABLE
VALUE

Europäisches Patentamt
European Patent Office
Office européen des brevets

# EUROPEAN SEARCH REPORT

Application Number
EP 26 15 1071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 235600 A (HITACHI LTD) 29 November 2012 (2012-11-29) * figures 1,4,13 * ----- | 1-8 | INV. H02M7/5395 ADD. H02P27/08 |
| A | KIM JOON-SEOK ET AL: "Smooth Pulse Number Transition Strategy Considering Time Delay in Synchronized SVPWM", IEEE TRANSACTIONS ON POWER ELECTRONICS INSTITUTE OF ELECTRICAL AND ELECTRONICS ENGINEERS, USA, vol. 38, no. 2, 22 September 2022 (2022-09-22), pages 2252-2261, XP011927632, ISSN: 0885-8993, DOI: 10.1109/TPEL.2022.3208868 [retrieved on 2022-09-23] * figure 1 * * Section II, first paragraph * ----- | 1-8 | |
| A | DAEUBLER C.: "MECHANISMS OF GENERATION AND CORRECTIVE ACTIONS AGAINST CONDUCTIVE EMI IN THE LINE CURRENT OF THE E 402 B LOCOMOTIVE FOR THE ITALIAN STATE RAILWAY.", 8TH EUROPEAN CONFERENCE ON POWER ELECTRONICS AND APPLICATIONS. LAUSANNE, CH, SEPT. 7 - 9, 1999.; [EPE . EUROPEAN CONFERENCE ON POWER ELECTRONICS AND APPLICATIONS.] EPE ASSOCIATION., BRUSSELS, BE, vol. CONF. 8, 7 September 1999 (1999-09-07), pages 01-07., XP000878414, ISBN: 9789075815047 * figures 1,2,6 * ----- -/-- | 1-8 | TECHNICAL FIELDS SEARCHED (IPC) H02M H02P |

The present search report has been drawn up for all claims

1

| Place of search | Date of completion of the search | Examiner |
|---|---|---|
| The Hague | 5 June 2026 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number
EP 26 15 1071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KATURI GUDARU VENKAIAH ET AL: "Closed Loop Control of Induction Motor Operated with Hybrid PWM(SVM+SOPWM) at Low Switching Frequency for Traction Applications", 2024 IEEE INTERNATIONAL CONFERENCE ON POWER ELECTRONICS, DRIVES AND ENERGY SYSTEMS (PEDES) IEEE, 18 December 2024 (2024-12-18), pages 1-8, XP034894422, DOI: 10.1109/PEDES61459.2024.10960738 [retrieved on 2025-04-21] * figure 1 * ----- | 1-8 | |
| A | OLESCHUK V. ET AL: "Elimination of subharmonics in spectra of output voltage of drive inverters with space-vector PWM", 2014 16TH INTERNATIONAL CONFERENCE ON HARMONICS AND QUALITY OF POWER (ICHQP) IEEE, 25 May 2014 (2014-05-25), pages 365-369, XP032611660, ISSN: 2164-0610, DOI: 10.1109/ICHQP.2014.6842766 [retrieved on 2014-06-24] * figure 3 * ----- | 1-8 | TECHNICAL FIELDS SEARCHED (IPC) |
| A | JP 5 319205 B2 (TOYOTA CENTRAL RES & DEV; TOYOTA MOTOR CORP) 16 October 2013 (2013-10-16) * figures 16,17 * ----- | 1-8 | |
| A | WO 2018/037454 A1 (MITSUBISHI ELECTRIC CORP [JP]) 1 March 2018 (2018-03-01) * figures 6,7 * ----- -/-- | 1-8 | |

The present search report has been drawn up for all claims

1

| Place of search | Date of completion of the search | Examiner |
|---|---|---|
| The Hague | 5 June 2026 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number
EP 26 15 1071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SONG ZHIHAO ET AL: "Strategy and Implementation of Harmonic-Reduced Synchronous Optimal PWM for High Speed PMSM", 2023 IEEE ENERGY CONVERSION CONGRESS AND EXPOSITION (ECCE) IEEE, 29 October 2023 (2023-10-29), pages 4756-4761, XP034507959, DOI: 10.1109/ECCE53617.2023.10362023 [retrieved on 2023-12-29] * figure 8 * ----- | 1-8 | |

TECHNICAL FIELDS SEARCHED (IPC)

The present search report has been drawn up for all claims

1

| Place of search | Date of completion of the search | Examiner |
|---|---|---|
| The Hague | 5 June 2026 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 1071

This annex lists the patent family members relating to the patent documents cited in the above-mentioned European search report. The members are as contained in the European Patent Office EDP file on
The European Patent Office is in no way liable for these particulars which are merely given for the purpose of information.

05-06-2026

| Patent document cited in search report | Publication date | Patent family member(s) | Publication date |
|---|---|---|---|
| JP 2012235600 A | 29-11-2012 | CN 102761288 A | 31-10-2012 |
| | | JP 5512593 B2 | 04-06-2014 |
| | | JP 2012235600 A | 29-11-2012 |
| JP 5319205 B2 | 16-10-2013 | JP 5319205 B2 | 16-10-2013 |
| | | JP 2010051129 A | 04-03-2010 |
| WO 2018037454 A1 | 01-03-2018 | JP 6591075 B2 | 16-10-2019 |
| | | JP WO2018037454 A1 | 07-03-2019 |
| | | WO 2018037454 A1 | 01-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2025032190 A
- JP 2014204560 A